# EUROPÄISCHE PATENTSCHRIFT

(11) **EP 3 740 406 B1**
(45) Veröffentlichungstag und Bekanntmachung des Hinweises auf die Patenterteilung: **07.06.2023**
(21) Anmeldenummer: 19701453.3
(22) Anmeldetag: 11.01.2019
(51) Int. Cl.: B60W 30/09, B60W 30/095, B60T 7/08, B60T 17/20, B60T 7/14, B60T 7/22, G05G 1/34, B60K 28/06, G08B 21/06

(54) **ASSISTENZSYSTEM FÜR EIN FAHRZEUG**
ASSISTANCE SYSTEM FOR A VEHICLE
SYSTÈME D'AIDE À LA CONDUITE POUR UN VÉHICULE

(30) Priorität: 18.01.2018 DE 102018200821; 10.07.2018 DE 102018211339
(43) Veröffentlichungstag der Anmeldung: 25.11.2020
(73) Patentinhaber: VOLKSWAGEN AKTIENGESELLSCHAFT, 38440 Wolfsburg (DE)
(72) Erfinder: KLINK, Benjamin, 80337 München (DE); KIRSCHNER, Dominik, 85049 Ingolstadt (DE); EIGEL, Thomas, 13585 Berlin (DE); WEGNER, Johanna, 38518 Gifhorn (DE); BUSCH, Sebastian, 38114 Braunschweig (DE)
(86) Internationale Anmeldenummer: PCT/EP2019/050628
(87) Internationale Veröffentlichungsnummer: WO 2019/141596

(56) Entgegenhaltungen:
- DE-A1- 10 258 617
- DE-A1-102010 044 024
- DE-A1-102011 109 618
- DE-A1-102013 009 339
- DE-A1-102016 203 020
- US-A1- 2012 123 644

## Beschreibung

Die vorliegende Erfindung betrifft ein Assistenzsystem für ein Fahrzeug zur Bereitstellung einer Nothalteassistenzfunktion. Ferner bezieht sich die Erfindung auf ein Verfahren zur Bereitstellung der Nothalteassistenzfunktion.

Es ist aus dem Stand der Technik bekannt, dass eine Nothalteassistenzfunktion automatisch aktiviert werden kann, wenn eine Fahrerinaktivität detektiert wird. Die Nothalteassistenzfunktion dient dabei dazu, das Fahrzeug automatisiert und/oder autonom ohne Mitwirkung des Fahrers sicher zum Stillstand zu bringen. Allerdings ist es oft ein Nachteil, dass ein weiterer Insasse, wie ein Beifahrer, nicht optimal auf die Nothalteassistenzfunktion einwirken kann.

Aus der DE 10 2016 203 020 A1 sowie DE 10 2016 203 021 A1 sowie DE 10 2010 044 024 A1 sind gattungsgemäße Assistenzsysteme bekannt.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine verbesserte Möglichkeit zur Ausführung einer Nothalteassistenzfunktion vorzuschlagen.

Die voranstehende Aufgabe wird gelöst durch ein Assistenzsystem mit den Merkmalen des Anspruchs 1 und durch ein Verfahren mit den Merkmalen des Anspruchs 6. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Assistenzsystem beschrieben sind, selbstverständlich auch im Zusammenhang mit dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Assistenzsystem für ein Fahrzeug, vorzugsweise für ein Kraftfahrzeug und/oder Personenkraftfahrzeug, wobei das Assistenzsystem zur Bereitstellung einer Nothalteassistenzfunktion dient.

Das erfindungsgemäße Assistenzsystem weist eine Ausführungsvorrichtung auf, um die Nothalteassistenzfunktioin mit mindestens einer von mehreren Aktivierungsstufen auszuführen.

Erfindungsgemäß weist das Assistenzsystem auch eine Detektionsvorrichtung zur automatischen Detektion einer Fahrerinaktivität auf, um die Nothalteassistenzfunktion mit einer ersten Stufenauswahl der Aktivierungsstufen zu aktivieren. Vorzugsweise führt die Ausführungsvorrichtung die Nothalteassistenzfunktion mit der ersten Stufenauswahl der Aktivierungsstufen gemäß einer automatischen Aktivierungsart aus.

Erfindungsgemäß weist das Assistenzsystem auch eine Auslösevorrichtung zur Überwachung eines Bedienelements einer elektrischen Parkbremse (d.h. Feststellbremse) auf, um bei einer manuellen Betätigung des Bedienelements durch einen Insassen des Fahrzeugs die Nothalteassistenzfunktion mit einer zweiten Stufenauswahl der Aktivierungsstufen zu aktivieren, welche sich von der ersten Stufenauswahl unterscheidet, sodass vorzugsweise die Ausführungsvorrichtung die Nothalteassistenzfunktion mit der zweiten Stufenauswahl der Aktivierungsstufen gemäß einer manuellen Aktivierungsart ausführt. Als nicht erfindungsgemäßes Beispiel, außerhalb des Schutzumfangs, kann es sich bei dem Bedienelement auch um das Bedienelement einer Parksperre eines Getriebes, insbesondere eines Automatikgetriebes des Fahrzeugs handeln.

Durch die Nutzung der manuellen Betätigung zur Aktivierung der Nothalteassistenzfunktion kann der Vorteil erzielt werden, dass bei Anwesenheit eines Beifahrers oder bei noch bestehender Handlungsfähigkeit des Fahrers frühzeitig das Nothalten des Fahrzeuges initiiert werden kann. In Anbetracht des enormen Risikos, welches von einer unkontrollierten Fahrt ausgeht, kann auf diese Weise wertvolle Zeit für die Auslösung des Nothalteassistenten eingespart werden. Zur manuellen Betätigung kann dabei eine einstufige und einfache Handlung vorgesehen sein, zum Beispiel das Ziehen oder Drücken des Bedienelements. Insbesondere die elektronische Parkbremse ist dem Fahrer und Beifahrer bereits dafür bekannt, dass es eine Abbremsung durchführt, und somit intuitiv bedienbar. Zur weiteren Verbesserung kann eine Beschriftung auf einem Beschriftungselement oder am Bedienelement oder benachbart zu dem Bedienelement vorgesehen sein. Die unterschiedliche Stufenauswahl ermöglicht dabei eine optimale Anpassung an die Aktivierungsart, das heißt manuell durch das Bedienelement oder automatisch durch die Detektion der Fahrerinaktivität. Damit kann die Anpassungsfähigkeit des Assistenzsystems verbessert werden, um zum Beispiel bei einer manuellen Aktivierung einen schnelleren Nothalt durchzuführen.

Das Bedienelement kann primär zur Aktivierung der elektrischen Parkbremse (auch: elektrische Feststellbremse) im Innenraum des Fahrzeuges betätigbar angeordnet sein, wobei die Betätigung beispielsweise durch ein Bewegen in eine erste Richtung (z. B. ein Ziehen) oder eine Parkposition ("P"-Position) erfolgt. Damit erfolgt die Bedienung intuitiv für den Insassen, da er die Betätigung der elektrischen Parkbremse oder die Parkposition mit dem Anhalten des Fahrzeugs verknüpft. Die manuelle Aktivierung der Nothalteassistenzfunktion kann beispielsweise dadurch erfolgen, dass das Bedienelement für eine vordefinierte Zeitdauer betätigt werden muss. Dabei kann eine entsprechende Warnmeldung während der Betätigung über die bevorstehende Aktivierung die Insassen des Fahrzeuges informieren. Erst nach Ablauf der vordefinierten Zeitdauer und dabei andauernder Betätigung kann die manuelle Aktivierung der Nothalteassistenzfunktion erfolgen. In anderen Worten kann ein zeitliches Entprellen des Bedienelements bereitgestellt werden. Die manuelle Aktivierung kann dann zur Folge haben, dass parallel zur Parkbremsen-Abbremsung ein weiteres Abbremsen des Fahrzeuges bis zum Stillstand des Fahrzeuges erfolgt. Ein sogenannter Eskalationsverlauf der Nothalteassistenzfunktion kann bei der manuellen Aktivierung gegenüber der automatischen Aktivierung dahingehend geändert werden, dass die Eskalationsstufen verkürzt werden, also beispielsweise die zweite Stufenauswahl anstatt der ersten Stufenauswahl erfolgt.

Das Bedienelement zum Schließen bzw. Lösen der Parksperre des Getriebes kann beispielsweise ein Gangwahlhebel oder ein Taster sein. Um eine Betätigung des Bedienelements während der Fahrt zu ermöglichen, erfolgt das Schließen der Parksperre nicht ausschließlich mechanisch. Das heißt, zwischen Bedienelement und Parksperre existiert keine feste mechanische Verbindung. Stattdessen können "Shift by Wire"-Systeme zur Anwendung kommen, bei denen das Bedienelement und die Parksperre über elektronische Komponenten verbunden sind. Eine andere Möglichkeit bieten entkoppelbare mechanische Verbindungen. Wird das Bedienelement während der Fahrt betätigt, ist die mechanische Verbindung entkoppelt. Während des Anhaltens des Fahrzeugs dagegen besteht eine Kopplung der mechanischen Verbindung, so dass die Parksperre geschlossen werden kann.

Die erste und/oder zweite Stufenauswahl kann eine Auswahl der nachfolgenden Aktivierungsstufen umfassen, wobei die wenigstens eine ausgewählte Aktivierungsstufe dann (bei mehreren auch in der angegebenen Reihenfolge) zur Ausführung der Nothalteassistenzfunktion ausgeführt wird:
- eine erste Aktivierungsstufe, welche zum Beispiel eine Initiierung einer Warnung (wie eine Textmeldung oder ein Symbol oder Piktogramm an der Instrumententafel) an den Fahrer umfasst,
- eine zweite Aktivierungsstufe, welche zum Beispiel die Initiierung wenigstens einer Weckaktion umfasst, zum Beispiel Bremsrucke (intermittierendes Bremsen) oder Gurtrucke (intermittierendes Aktivieren der Gurtstraffer), um den Fahrer aufzuwecken,
- eine dritte Aktivierungsstufe, welche zum Beispiel die Ausgabe eines Warnsignals für das Halten initiiert, zum Beispiel eine akustische Warnmeldung und/oder eine Umfeldwarnung, und/oder eine Abschaltfunktion initiiert, zum Beispiel zum Abschalten des Infotainmentsystems und/oder einer Innenbeleuchtung des Fahrzeuges, und/oder eine Entriegelungsfunktion initiiert, zum Beispiel zur Entriegelung der Türen des Fahrzeuges, und/oder eine Notruffunktion initiiert, zum Beispiel auch zum Aussenden von Positionsdaten des Fahrzeuges.

Vorteilhafterweise kann bei der ersten Stufenauswahl zunächst die erste, dann die zweite und anschließend die dritte Aktivierungsstufe ausgeführt werden, und bei der zweiten Stufenauswahl zunächst die zweite und dann die dritte oder sofort die dritte Aktivierungsstufe ausgeführt werden. Die Nothalteassistenzfunktion, und insbesondere die dritte Aktivierungsstufe, führt dabei insbesondere eine Abbremsung des Fahrzeuges bis zum Stillstand durch, insbesondere bei gleichzeitiger Auswertung der Umgebung und/oder des Verkehrs. Dabei kann das Fahrzeug auch autonom auf einen Seitenstreifen, eine Haltebucht oder an den Fahrbahnrand gefahren und dort angehalten werden. Auch kann durch das Assistenzsystem automatisch entschieden werden, ob ein Anhalten am Seitenstreifen, in einer Haltebucht oder auf der aktuellen Fahrbahn sicherer ist, um auf der aktuellen Fahrbahn für das Haltemanöver zu verbleiben. Optional kann zumindest bei der zweiten Stufenauswahl vorgesehen sein, dass diese Entscheidung auch manuell, beispielsweise durch einen Beifahrer, beeinflusst wird.

Des Weiteren ist es denkbar, dass eine Ausgabeinitiierungsvorrichtung vorgesehen ist, um gemäß einer ersten Aktivierungsstufe eine Warnmeldung für einen Insassen des Fahrzeuges zu initiieren. Dabei kann die Ausführungsvorrichtung dazu ausgebildet sein, gemäß der ersten Stufenauswahl die erste Aktivierungsstufe auszuführen, und gemäß der zweiten Stufenauswahl die erste Aktivierungsstufe zu überspringen und direkt die zweite Aktivierungsstufe auszuführen. Auf diese Weise ist eine Zeitersparnis möglich, da die erste Aktivierungsstufe bei der manuellen Aktivierung nicht notwendig ist.

Es kann weiter möglich sein, dass eine Weckinitiierungsvorrichtung vorgesehen ist, um wenigstens eine Weckaktion beim Fahrzeug zu initiieren, vorzugsweise um Bremsrucke und/oder Gurtrucke beim Fahrzeug gemäß einer zweiten Aktivierungsstufe zu initiieren. Vorzugsweise kann die Ausführungsvorrichtung dazu ausgebildet sein, gemäß der ersten Stufenauswahl und/oder gemäß der zweiten Stufenauswahl die zweite Aktivierungsstufe auszuführen. Damit wird der Vorteil erzielt, dass der Fahrer geweckt werden kann, um die Fahrzeugkontrolle zu übernehmen.

Bevorzugt kann im Rahmen der Erfindung vorgesehen sein, dass eine Funktionsinitiierungsvorrichtung vorgesehen ist, um sicherheitsrelevante Funktionen des Fahrzeuges begleitend zu einem Halten des Fahrzeuges gemäß einer dritten Aktivierungsstufe zu initiieren, wobei vorzugsweise die Ausführungsvorrichtung dazu ausgebildet ist, gemäß der ersten Stufenauswahl und/oder gemäß der zweiten Stufenauswahl die dritte Aktivierungsstufe auszuführen. Die sicherheitsrelevanten Funktionen sind beispielsweise eine Umfeldwarnung (wie die Aktivierung einer Warnblinkanlage), ein Notruf und/oder dergleichen.

Es ist möglich, dass wenigstens eine oder sämtliche der beschriebenen Vorrichtungen des erfindungsgemäßen Assistenzsystems, wie die Funktionsinitiierungsvorrichtung und/oder die Auslösevorrichtung und/oder die Detektionsvorrichtung und/oder die Ausführungsvorrichtung und/oder die Ausgabeinitiierungsvorrichtung und/oder die Weckinitiierungsvorrichtung, jeweils als separate Geräte oder als Teil eines gemeinsamen Gerätes ausgebildet sind, und/oder auch jeweils als computerimplementierte Vorrichtung ausgeführt sind, beispielsweise als Teil eines Computerprogramms.

Auch ist es optional denkbar, dass die Auslösevorrichtung dazu ausgeführt ist, ein zeitliches Entprellen des Bedienelements bereitzustellen. Hierzu kann bei einer Bewegung und/oder einem Halten des Bedienelements in einer Betätigungsstellung eine vordefinierte Zeitdauer abgewartet werden, und erst nach der Zeitdauer und weiterhin andauernder Bewegung und/oder weiterhin andauerndes Halten die Aktivierung der Nothalteassistenzfunktion in der manuellen Aktivierungsart erfolgen. Die Betätigungsstellung ist dabei eine Stellung des Bedienelements, welche durch ein Drücken und ein optional zusätzliches Ziehen des Bedienelements erreicht wird.

Ebenfalls Gegenstand der Erfindung ist ein Verfahren zur Bereitstellung einer Nothalteassistenzfunktion bei einem Fahrzeug. Hierbei ist vorgesehen, dass die nachfolgenden Schritte durchgeführt werden, vorzugsweise zeitlich nacheinander:
- Überwachen eines Fahrers des Fahrzeuges, zum Beispiel durch eine Erfassung eines Innenraums des Fahrzeuges mittels einer Kamera und/oder durch eine Lenkrad-Sensorik, um bei einer Detektion einer Fahrerinaktivität die Nothalteassistenzfunktion in einer automatischen Aktivierungsart zu aktivieren,
- Überwachen eines Bedienelements einer elektrischen Parkbremse oder einer Parksperre eines Getriebes des Fahrzeuges, zum Beispiel durch Bewegungs- und/oder Positionssensoren am Bedienelement, um bei einer Erfassung einer manuellen Betätigung des Bedienelements die Nothalteassistenzfunktion in einer manuellen Aktivierungsart zu aktivieren,
- Ausführen der Nothalteassistenzfunktion mit einer Auswahl wenigstens einer von mehreren Aktivierungsstufen, wobei die Auswahl in Abhängigkeit von der Aktivierungsart erfolgt, insbesondere unterschiedlich erfolgt, das heißt mit unterschiedlichen Aktivierungsstufen.

In anderen Worten kann die Auswahl für die manuelle und automatische Aktivierungsart unterschiedlich erfolgen. Damit bringt das erfindungsgemäße Verfahren die gleichen Vorteile mit sich, wie sie ausführlich mit Bezug auf ein erfindungsgemäßes Assistenzsystem beschrieben worden sind. Zudem kann bei dem erfindungsgemäßen Verfahren ein erfindungsgemäßes Assistenzsystem betrieben werden, um die Nothalteassistenzfunktion bereitzustellen.

Es ist möglich, dass die Nothalteassistenzfunktion erst dann in einer automatischen Aktivierungsart aktiviert wird, also insbesondere gemäß einer ersten Stufenauswahl ausgeführt wird, wenn über einen definierten Zeitraum (zum Beispiel einige Sekunden bis Minuten) einer Detektion der Fahrerinaktivität erfolgt. Auf diese Weise können Fehlauslösungen vermieden werden. Die Aktivierung der Nothalteassistenzfunktion kann die Abbremsung des Fahrzeuges bis zum vollständigen Stillstand bewirken und damit verhindern, dass während eines Notfalls das Fahrzeug unkontrolliert und mit hoher Geschwindigkeit weiterfährt.

Es kann weiter möglich sein, dass eine erste Stufenauswahl wenigstens eine erste und zweite Aktivierungsstufe umfasst, welche bei der automatischen Aktivierungsart nacheinander ausgeführt werden, wobei vorzugsweise bei der manuellen Aktivierungsart die erste dieser Aktivierungsstufen übersprungen wird. Damit kann eine deutliche Zeitersparnis zur Aktivierung erzielt werden.

Gemäß einem weiteren Vorteil kann vorgesehen sein, dass bei der Aktivierung in der automatischen Aktivierungsart zunächst gemäß einer ersten Aktivierungsstufe eine Warnung für den Fahrer initiiert wird, insbesondere um den Fahrer zur Übernahme der Steuerung des Fahrzeuges aufzufordern, und/oder Brems- und/oder Gurtrucke initiiert werden. Dies kann den Vorteil haben, dass der Fahrer noch geweckt werden kann, um die Kontrolle des Fahrzeuges zu übernehmen. In diesem Fall kann die Nothalteassistenzfunktion wieder deaktiviert werden, wenn beispielsweise die Fahreraktivität detektiert wird. Weiter kann vorteilhafterweise nach der Initiierung dieser Warnung und/oder der Brems- und/oder Gurtrucke erst nach einer vordefinierten Zeitdauer weiterer Fahrerinaktivität eine zweite Aktivierungsstufe ausgeführt werden, wobei bevorzugt bei der Aktivierung in der manuellen Aktivierungsart die zweite Aktivierungsstufe sofort ausgeführt wird.

Vorteilhaft ist es darüber hinaus, wenn im Rahmen der Erfindung die Aktivierung in der manuellen Aktivierungsart erst dann erfolgt, wenn ein Drücken oder Ziehen des Bedienelements erfasst wird und/oder eine Beendigung der Betätigung des Bedienelements erfasst wird, wobei vorzugsweise bereits vor der Beendigung der Betätigung eine Abbremsung des Fahrzeuges erfolgt. Diese Abbremsung erfolgt z. B. durch die Parkbremsen-Abbremsung, und kann die Sicherheit beim Haltemanöver weiter erhöhen. Das Bedienelement kann als Primärfunktion die Aktivierung der Parkbremse oder das Schließen der Parksperre und als Sekundärfunktion die Aktivierung der Nothalteassistenzfunktion betätigen, wobei die Sekundärfunktion anders als die Primärfunktion gegebenenfalls nur während der Fahrt aktivierbar ist.

Die manuelle Aktivierung der Nothalteassistenzfunktion erfolgt erfindungsgemäß erst dann, wenn ein Drücken des Bedienelements erfasst wird, wobei das Drücken erfindungsgemäß ausschließlich der Aktivierung der Nothalteassistenzfunktin beim Fahrzeug zugewiesen ist. Unter dem Drücken wird dabei insbesondere die Bewegung in einer Bewegungsrichtung (entgegengesetzt zum Ziehen), insbesondere in Richtung Fahrzeugboden oder in Fahrtrichtung, verstanden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines erfindungsgemäßen Assistenzsystems,
- Fig. 2: eine schematische Darstellung zur Visualisierung eines erfindungsgemäßen Verfahrens.

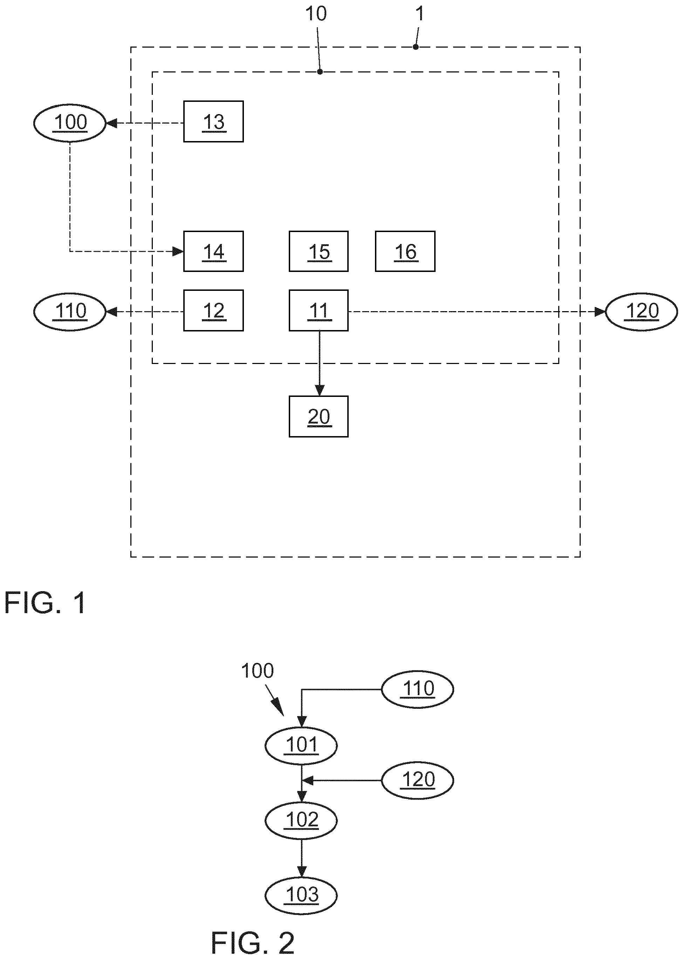

Figur 1 zeigt ein erfindungsgemäßes Assistenzsystem 10 für ein Fahrzeug 1 zur Bereitstellung einer Nothalteassistenzfunktion. Das Assistenzsystem 10 kann Teil einer Elektronik des Fahrzeuges 1 sein, und entsprechend wenigstens ein Steuergerät zur Durchführung der Schritte eines erfindungsgemäßen Verfahrens aufweisen. Weiter kann es möglich sein, dass das Assistenzsystem 10 mit wenigstens einer weiteren Komponente des Fahrzeuges 1 verbunden ist, wie beispielsweise mit Sensoren (Kameras, Abstandssensoren und dergleichen), einem Bremssystem, einem System zur Ansteuerung von Gurtstraffern, einem Ausgabesystem (wie der Instrumententafel oder der Mittelkonsole) und/oder dergleichen.

Das Assistenzsystem 10 umfasst wenigstens eine Ausführungsvorrichtung 13, um die Nothalteassistenzfunktion mit zumindest einer von mehreren Aktivierungsstufen 100 auszuführen. Bei diesen Aktivierungsstufen 100 kann es sich jeweils um einzelne oder mehrere Funktionen und/oder Prozeduren handeln, welche für die Nothalteassistenzfunktion durchgeführt werden. Dabei kann es möglich sein, dass die Ausführungsvorrichtung 13 eine Ausführungsanordnung mit wenigstens einem Mikrocontroller oder Prozessor oder dergleichen aufweist, um die wenigstens eine oder sämtliche der Aktivierungsstufen 100 auszuführen.

Es ist dabei möglich, dass die Nothalteassistenzfunktion in unterschiedlicher Weise ausgeführt werden kann, das heißt mit unterschiedlichen Abläufen dieser Funktionen und/oder Prozeduren. So können bestimmte Aktivierungsstufen 100 nur einer automatischen Aktivierung, das heißt einer automatischen Aktivierungsart, der Nothalteassistenzfunktion zugeordnet sein, und entsprechend darauf bei einer manuellen Auslösung, das heißt einer manuellen Aktivierungsart, der Nothalteassistenzfunktion verzichtet werden. Dies hängt insbesondere damit zusammen, dass die automatische Aktivierung aufgrund einer automatisierten Detektion einer Fahrerinaktivität durchgeführt wird, was erfordert, dass eine Fehldetektion ausgeschlossen wird. Hierzu kann eine erste Aktivierungsstufe 101 vorgesehen sein, um eine Latenz bis zum tatsächlichen Nothalt einzuräumen. Dagegen ist es bei der manuellen Auslösung nicht erforderlich, diese Fehldetektion auszuschließen, da in der Regel eine bewusste Handlung des Insassen, insbesondere des Beifahrers vorausging. Es kann optional vorgesehen sein, dass eine andere Aktivierungsstufe, zum Beispiel eine angepasste erste Aktivierungsstufe oder direkt eine zweite Aktivierungsstufe, stattdessen durchgeführt wird, um eine Fehlbedienung durch den Insassen, insbesondere den Beifahrer, zu erkennen.

Das Assistenzsystem weist eine Detektionsvorrichtung 12 zur automatischen Detektion einer Fahrerinaktivität auf, um die Nothalteassistenzfunktion mit einer ersten Stufenauswahl 110 der Aktivierungsstufen 100 zu aktivieren. Damit eine Fehldetektion ausgeschlossen werden kann, umfasst diese erste Stufenauswahl 110 eine erste Aktivierungsstufe 101, um ein Aufforderungs- und/oder Warn- und/oder Wecksignal für den Fahrer auszugeben.

Darüber hinaus ist auch eine Auslöserichtung 11 zur Überwachung eines Bedienelements 20 einer elektrischen Parkbremse des Fahrzeugs 1 beim erfindungsgemäßen Assistenzsystem 10 vorgesehen, um bei einer manuellen Betätigung des Bedienelements 20 die Nothalteassistenzfunktion mit einer zweiten Stufenauswahl 120 der Aktivierungsstufen 100 zu aktivieren, welche sich von der ersten Stufenauswahl 110 unterscheidet.

Hier kann auf einen Ausschluss der Fehldetektion verzichtet werden, da bereits eine bewusste Aktivierung vorliegt. Es wird in diesem Fall davon ausgegangen, dass eine Notsituation beispielsweise durch den Beifahrer erkannt wurde und somit tatsächlich vorliegt. Damit kann auf die Ausgabe des Aufforderungs- und/oder Warn- und/oder Wecksignals verzichtet werden. Hingegen kann optional stattdessen eine andersartige Warnmeldung oder dergleichen ausgegeben werden, um beispielsweise eine Fehlbedienung zu erkennen. Auch ist es möglich, dass trotz der manuellen Betätigung versucht wird, den Fahrer durch eine Weckaktion und/oder die Ausgabe des Wecksignals, wie durch Gurtrucke, zu wecken.

Sowohl die Detektionsvorrichtung 12 als auch die Auslösevorrichtung 11 können dabei separate Komponenten, wie Steuergeräte oder dergleichen, sein oder auch in der Ausführungsvorrichtung 13 integriert sein, das heißt durch die gleiche Ausführungsanordnung bereitgestellt sein. In anderen Worten können die Vorrichtungen des Assistenzsystems 10 auch ein gemeinsames Bauteil oder Gerät bilden oder alternativ jeweils als separate Geräte ausgeführt sein.

Die Auslösevorrichtung 11 kann die Überwachung des Bedienelements 20 dadurch bewirken, dass das Assistenzsystem 10 eine elektrische Verbindung zu einem Bremssystem, dem Bedienelement und/oder der Parksperre oder dergleichen des Fahrzeuges 1 aufweist. Über diese Verbindung kann dann eine elektrische Auslösung detektiert werden, wenn ein Insasse des Fahrzeuges 1 das Bedienelement 20 bewegt. Hierbei ist es möglich, dass das Bedienelement 20 als Hebel, Schalter oder Taster oder dergleichen ausgeführt ist und in wenigstens einen Bewegungsverlauf bringbar ist. Ein erster Bewegungsverlauf wird beispielsweise durch ein Ziehen oder Drücken des Bedienelements 20 aus einer Ausgangsstellung des Bedienelements 20 bewirkt, was dann zum Aktivieren der elektronischen Parkbremse oder Schließen der Parksperre des Fahrzeuges 1 genutzt wird. Dies hat den Vorteil, dass dem Insassen, insbesondere dem Beifahrer, die Bremsfunktion oder die Parkfunktion/Haltefunktion bereits bekannt ist und daher intuitiv dieser Bewegungsverlauf ebenfalls zur Auslösung der Nothalteassistenzfunktion genutzt werden kann. Auch ist es denkbar, dass aus der Ausgangsstellung heraus alternativ oder zusätzlich ein zusätzliches Drücken des Bedienelements 20 möglich ist. Dieses zusätzliche Drücken kann beispielsweise exklusiv der Nothalteassistenzfunktion zugeordnet werden und entsprechend detektiert werden.

Wird eine derartige manuelle Betätigung detektiert, kann die Auslösevorrichtung 11 die Nothalteassistenzfunktion mit der zweiten Stufenauswahl 120 der Aktivierungsstufen 100 aktivieren. Dagegen erfolgt bei einer automatischen Detektion einer Fahrerinaktivität die Aktivierung der Nothalteassistenzfunktion mit der ersten Stufenauswahl 110 der Aktivierungsstufen 100. Es handelt sich dabei um unterschiedliche Stufenauswahlen. Zum Beispiel umfasst die erste Stufenauswahl 110 wenigstens eine zusätzliche oder andere Aktivierungsstufe 100 im Vergleich zur zweiten Stufenauswahl 120.

Nachfolgend werden einige mögliche Aktivierungsstufen 100 näher beschrieben. Nur einige der Aktivierungsstufen 100 können dabei auch für die zweite Stufenauswahl 120 vorgesehen sein. Das heißt, es kann möglich sein, dass über die manuelle Betätigung mittels des Bedienelements 20 zur Ausführung der Nothalteassistenzfunktion nur einige dieser Aktivierungsstufen 100 gemäß der zweiten Stufenauswahl 120 ausgeführt werden.

Es kann eine Ausgabeinitiierungsvorrichtung 14 vorgesehen sein, um gemäß einer ersten Aktivierungsstufe 101 eine Warnmeldung für einen Insassen des Fahrzeuges 1 zu initiieren. Um dies bei der automatischen Aktivierung zu ermöglichen, kann die Ausführungsvorrichtung 13 dazu ausgebildet sein, gemäß der ersten Stufenauswahl 110 die erste Aktivierungsstufe 101 auszuführen. Weiter kann gemäß der zweiten Stufenauswahl 120 die erste Aktivierungsstufe 101 übersprungen werden, also nicht ausgeführt werden. Dieser Ablauf ist auch in Figur 2 zur Visualisierung des erfindungsgemäßen Verfahrens veranschaulicht.

Gemäß Figur 1 kann ferner eine Weckinitiierungsvorrichtung 15 vorgesehen sein, um wenigstens eine Weckaktion zu initiieren, vorzugsweise um Bremsrucke und/oder Gurtrucke des Fahrzeuges 1 einzuleiten. Der Weckaktion kann einer zweiten Aktivierungsstufe 102 zugeordnet sein, um den Fahrer wieder aufzuwecken oder um auf die Aktivierung des Nothalteassistenten aktiv aufmerksam zu machen. Eine solche Funktion kann nur bei der automatischen Aktivierungsart oder auch bei der manuellen Aktivierungsart vorgesehen sein. Entsprechend kann die Ausführungsvorrichtung 13 dazu ausgebildet sein, gemäß der ersten Stufenauswahl 110 und optional auch gemäß der zweiten Stufenauswahl 120 die zweite Aktivierungsstufe 102 auszuführen.

Ferner kann auch eine Funktionsinitiierungsvorrichtung 16 vorgesehen sein, um sicherheitsrelevante Funktionen des Fahrzeuges 1 begleitend zu einem Halten des Fahrzeuges 1 gemäß einer dritten Aktivierungsstufe 103 zu initiieren, wobei die Ausführungsvorrichtung 13 dazu ausgebildet ist, gemäß der ersten Stufenauswahl 110 und gemäß der zweiten Stufenauswahl 120 die dritte Aktivierungsstufe 103 auszuführen. Es handelt sich bei der dritten Aktivierungsstufe 103 um den Kern der Nothalteassistenzfunktion, welche ein sicheres Abbremsen des Fahrzeuges 1 bis zum Stillstand und/oder eine Aktivierung der Warnblinkanlage und/oder ein Absetzen eines Notrufes oder dergleichen initiiert.

Weiterhin kann es möglich sein, dass die Auslösevorrichtung 11 dazu ausgeführt ist, ein zeitliches Entprellen des Bedienelements 20 bereitzustellen. Das zeitliche Entprellen dient dazu, eine Fehlbedienung des Bedienelements 20 auszuschließen. Es kann also nach der Detektion des Drückens eine vordefinierte Zeitdauer abgewartet werden. Wenn innerhalb dieser Zeitdauer die Betätigung beendet wird, so kann dies als Fehlbedienung gewertet werden. Erst wenn nach der Zeitdauer die Betätigung anhält und/oder beendet wird, wird dies als manuelle Betätigung des Bedienelements 20 erfasst werden.

Es kann gemäß einem erfindungsgemäßen Verfahren möglich sein, dass zunächst ein Überwachen eines Fahrers des Fahrzeuges 1 während der Fahrt erfolgt, um bei einer Detektion einer Fahrerinaktivität die Nothalteassistenzfunktion in der automatischen Aktivierungsart zu aktivieren. Auf eine Fahrerinaktivität deutet zum Beispiel hin, dass der Fahrer über eine gewisse Zeitdauer das Lenkrad nicht mehr bewegt. Auch kann hierzu eine Kameraaufnahme des Fahrers ausgewertet werden. Ferner kann ein Überwachen des Bedienelements 20 der elektrischen Parkbremse oder der Parksperre des Fahrzeuges 1 während der Fahrt durchgeführt werden, um bei einer Erfassung einer manuellen Betätigung des Bedienelements 20 die Nothalteassistenzfunktion in der manuellen Aktivierungsart zu aktivieren. Dies ist sinnvoll, damit der Beifahrer die Nothalteassistenzfunktion manuell auslösen kann, ohne auf die automatische Detektion der Fahrerinaktivität zu warten. Sodann kann die Nothalteassistenzfunktion mit einer Auswahl wenigstens einer von mehreren Aktivierungsstufen 100 ausgeführt werden, wobei die Auswahl in Abhängigkeit von der Aktivierungsart erfolgt. Es ist denkbar, dass eine erste Stufenauswahl 110 wenigstens eine erste und zweite Aktivierungsstufe 101, 102 umfasst, welche bei der automatischen Aktivierungsart nacheinander ausgeführt werden, wobei bei der manuellen Aktivierungsart die erste dieser Aktivierungsstufe 100 übersprungen werden kann. Es ist ebenfalls denkbar, dass bei der Aktivierung in der automatischen Aktivierungsart zunächst gemäß einer ersten Aktivierungsstufe 101 eine Warnung für den Fahrer initiiert wird, insbesondere um den Fahrer zur Übernahme der Steuerung des Fahrzeuges 1 aufzufordern, und/oder Brems- und/oder Gurtrucke zu initiieren, insbesondere um den Fahrer zu wecken. Nach dieser Initiierung (der Warnung und/oder der Brems- und/oder Gurtrucke) kann erst nach einer vordefinierten Zeitdauer weiterer Fahrerinaktivität eine zweite Aktivierungsstufe 102 ausgeführt werden, wobei bei der Aktivierung in der manuellen Aktivierungsart die zweite Aktivierungsstufe 102 sofort ausgeführt wird. Dies wird insbesondere anhand Figur 2 verdeutlicht. Außerdem kann die Aktivierung in der manuellen Aktivierungsart vorteilhafterweise erst dann erfolgen, wenn ein Ziehen des Bedienelements 20 und/oder eine Beendigung der Betätigung des Bedienelements 20 erfasst wird, wobei vorzugsweise bereits vor der Beendigung der Betätigung, insbesondere durch die Parkbremsen-Funktionalität, eine Abbremsung des Fahrzeuges 1 erfolgt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug

- 10: Assistenzsystem
- 11: Auslösevorrichtung
- 12: Detektionsvorrichtung
- 13: Ausführungsvorrichtung
- 14: Ausgabeinitiierungsvorrichtung
- 15: Weckinitiierungsvorrichtung
- 16: Funktionsinitiierungsvorrichtung

- 20: Bedienelement

- 100: Aktivierungsstufen
- 101: erste Aktivierungsstufe
- 102: zweite Aktivierungsstufe
- 103: dritte Aktivierungsstufe
- 110: erste Stufenauswahl

- 120: zweite Stufenauswahl

## Patentansprüche

1. Assistenzsystem (10) für ein Fahrzeug (1) zur Bereitstellung einer Nothalteassistenzfunktion, aufweisend:
- eine Ausführungsvorrichtung (13), um die Nothalteassistenzfunktion mit zumindest einer von mehreren Aktivierungsstufen (100) auszuführen,
- eine Detektionsvorrichtung (12) zur automatischen Detektion einer Fahrerinaktivität, um die Nothalteassistenzfunktion mit einer ersten Stufenauswahl (110) der Aktivierungsstufen (100) zu aktivieren,
- eine Auslösevorrichtung (11) zur Überwachung eines Bedienelements (20) einer elektrischen Parkbremse des Fahrzeuges (1), um bei einer manuellen Betätigung des Bedienelements (20) die Nothalteassistenzfunktion mit einer zweiten Stufenauswahl (120) der Aktivierungsstufen (100) zu aktivieren, welche sich von der ersten Stufenauswahl (110) unterscheidet,
**dadurch gekennzeichnet, dass** die Aktivierung in der manuellen Aktivierungsart erst dann erfolgt, wenn ein Drücken des Bedienelements (20) erfasst wird, wobei das Drücken ausschließlich der Aktivierung der Nothalteassistenzfunktion beim Fahrzeug (1) zugewiesen ist.

2. Assistenzsystem (10) nach Anspruch 1,
**dadurch gekennzeichnet,**
**dass** eine Ausgabeinitiierungsvorrichtung (14) vorgesehen ist, um gemäß einer ersten Aktivierungsstufe (101) eine Warnmeldung für einen Insassen des Fahrzeuges (1) zu initiieren, wobei die Ausführungsvorrichtung (13) dazu ausgebildet ist, gemäß der ersten Stufenauswahl (110) die erste Aktivierungsstufe (101) auszuführen, und gemäß der zweiten Stufenauswahl (120) die erste Aktivierungsstufe (101) zu überspringen.

3. Assistenzsystem (10) nach Anspruch 1 oder 2,
**dadurch gekennzeichnet,**
**dass** eine Weckinitiierungsvorrichtung (15) vorgesehen ist, um wenigstens eine Weckaktion, vorzugsweise um Bremsrucke und/oder Gurtrucke des Fahrzeuges (1) gemäß einer zweiten Aktivierungsstufe (102) zu initiieren, wobei die Ausführungsvorrichtung (13) dazu ausgebildet ist, gemäß der ersten Stufenauswahl (110) und gemäß der zweiten Stufenauswahl (120) die zweite Aktivierungsstufe (102) auszuführen.

4. Assistenzsystem (10) nach einem der vorhergehenden Ansprüche,
**dadurch gekennzeichnet,**
**dass** eine Funktionsinitiierungsvorrichtung (16) vorgesehen ist, um sicherheitsrelevante Funktionen des Fahrzeuges (1) begleitend zu einem Halten des Fahrzeuges (1) gemäß einer dritten Aktivierungsstufe (103) zu initiieren, wobei die Ausführungsvorrichtung (13) dazu ausgebildet ist, gemäß der ersten Stufenauswahl (110) und gemäß der zweiten Stufenauswahl (120) die dritte Aktivierungsstufe (103) auszuführen.

5. Assistenzsystem (10) nach einem der vorhergehenden Ansprüche,
**dadurch gekennzeichnet,**
**dass** die Auslösevorrichtung (11) dazu ausgeführt ist, ein zeitliches Entprellen des Bedienelements (20) bereitzustellen.

6. Verfahren zur Bereitstellung einer Nothalteassistenzfunktion bei einem Fahrzeug (1), wobei die nachfolgenden Schritte durchgeführt werden:
- Überwachen eines Fahrers des Fahrzeuges (1), um bei einer Detektion einer Fahrerinaktivität die Nothalteassistenzfunktion in einer automatischen Aktivierungsart zu aktivieren,
- Überwachen eines Bedienelements (20) einer elektrischen Parkbremse des Fahrzeuges (1), um bei einer Erfassung einer manuellen Betätigung des Bedienelements (20) die Nothalteassistenzfunktion in einer manuellen Aktivierungsart zu aktivieren,
- Ausführen der Nothalteassistenzfunktion mit einer Auswahl wenigstens einer von mehreren Aktivierungsstufen (100), wobei die Auswahl in Abhängigkeit von der Aktivierungsart erfolgt,
**dadurch gekennzeichnet, dass** die Aktivierung in der manuellen Aktivierungsart erst dann erfolgt, wenn ein Drücken des Bedienelements (20) erfasst wird, wobei das Drücken ausschließlich der Aktivierung der Nothalteassistenzfunktion beim Fahrzeug (1) zugewiesen ist.

7. Verfahren nach Anspruch 6,
**dadurch gekennzeichnet,**
**dass** eine erste Stufenauswahl (110) wenigstens eine erste und zweite Aktivierungsstufe (101, 102) umfasst, welche bei der automatischen Aktivierungsart nacheinander ausgeführt werden, wobei bei der manuellen Aktivierungsart die erste dieser Aktivierungsstufen (100) übersprungen wird.

8. Verfahren nach Anspruch 6 oder 7,
**dadurch gekennzeichnet,**
**dass** bei der Aktivierung in der automatischen Aktivierungsart zunächst gemäß einer ersten Aktivierungsstufe (101) eine Warnung für den Fahrer initiiert wird, insbesondere um den Fahrer zur Übernahme der Steuerung des Fahrzeuges (1) aufzufordern, und/oder Brems- und Gurtrucke initiiert werden, insbesondere um den Fahrer zu wecken, und nach der Initiierung erst nach einer vordefinierten Zeitdauer weiterer Fahrerinaktivität eine zweite Aktivierungsstufe (102) ausgeführt wird, wobei bei der Aktivierung in der manuellen Aktivierungsart die zweite Aktivierungsstufe (102) sofort ausgeführt wird.

9. Verfahren nach einem der Ansprüche 6 bis 8,
**dadurch gekennzeichnet,**
**dass** die Aktivierung in der manuellen Aktivierungsart erst dann erfolgt, wenn ein Ziehen des Bedienelements (20) erfasst wird und/oder eine Beendigung der Betätigung des Bedienelements (20) erfasst wird, wobei vorzugsweise bereits vor der Beendigung der Betätigung eine Abbremsung des Fahrzeuges (1) erfolgt.

10. Verfahren nach einem der Ansprüche 6 bis 9,
**dadurch gekennzeichnet,**
**dass** ein Assistenzsystem (10) nach einem der Ansprüche 1 bis 5 betrieben wird, um die Schritte des Verfahrens durchzuführen.

## Claims

1. Assistance system (10) for a vehicle (1) for providing an emergency stop assistance function, having:
- an execution device (13) for executing the emergency stop assistance function with at least one of multiple activation levels (100),
- a detection device (12) for automatically detecting driver inactivity, in order to activate the emergency stop assistance function with a first level selection (110) of the activation levels (100),
- a trigger device (11) for monitoring an operating element (20) of an electric parking brake of the vehicle (1) in order, in the event of manual actuation of the operating element (20), to activate the emergency stop assistance function with a second level selection (120), which differs from the first level selection (110), of the activation levels (100),
**characterized in that** the activation in the manual activation mode takes place only when pressing of the operating element (20) is detected, wherein the pressing is associated exclusively with the activation of the emergency stop assistance function in the vehicle (1).

2. Assistance system (10) according to Claim 1,
**characterized in that**
provision is made for an output initiation device (14) in order to initiate a warning message for an occupant of the vehicle (1) in accordance with a first activation level (101), wherein the execution device (13) is designed to execute the first activation level (101) in accordance with the first level selection (110) and to bypass the first activation level (101) in accordance with the second level selection (120).

3. Assistance system (10) according to Claim 1 or 2,
**characterized in that**
provision is made for a wake-up initiation device (15) in order to initiate at least one wake-up action, preferably brake jolts and/or seatbelt jolts of the vehicle (1) in accordance with a second activation level (102), wherein the execution device (13) is designed to execute the second activation level (102) in accordance with the first level selection (110) and in accordance with the second level selection (120).

4. Assistance system (10) according to one of the preceding claims,
**characterized in that**
provision is made for a function initiation device (16) in order to initiate safety-relevant functions of the vehicle (1) in addition to stopping the vehicle (1) in accordance with a third activation level (103), wherein the execution device (13) is designed to execute the third activation level (103) in accordance with the first level selection (110) and in accordance with the second level selection (120).

5. Assistance system (10) according to one of the preceding claims,
**characterized in that**
the trigger device (11) is designed to provide temporal debouncing of the operating element (20).

6. Method for providing an emergency stop assistance function in a vehicle (1), wherein the following steps are performed:
- monitoring a driver of the vehicle (1) in order, in the event of detecting driver inactivity, to activate the emergency stop assistance function in an automatic activation mode,
- monitoring an operating element (20) of an electric parking brake of the vehicle (1) in order, in the event of detecting manual actuation of the operating element (20), to activate the emergency stop assistance function in a manual activation mode,
- executing the emergency stop assistance function with a selection of at least one of multiple activation levels (100), wherein the selection is made on the basis of the activation mode,
**characterized in that** the activation in the manual activation mode takes place only when pressing of the operating element (20) is detected, wherein the pressing is associated exclusively with the activation of the emergency stop assistance function in the vehicle (1).

7. Method according to Claim 6,
**characterized in that**
a first level selection (110) comprises at least a first and second activation level (101, 102) that are executed in succession in the automatic activation mode, wherein, in the manual activation mode, the first of these activation levels (100) is bypassed.

8. Method according to Claim 6 or 7,
**characterized in that**
in the activation in the automatic activation mode, a warning for the driver is first initiated in accordance with a first activation level (101), in particular in order to ask the driver to take over control of the vehicle (1), and/or brake jolts and seatbelt jolts are initiated, in particular in order to wake up the driver, and, following the initiation, a second activation level (102) is executed only after a predefined duration of further driver inactivity, wherein, in the activation in the manual activation mode, the second activation level (102) is executed immediately.

9. Method according to one of Claims 6 to 8,
**characterized in that**
the activation in the manual activation mode takes place only when pulling of the operating element (20) is detected and/or ending of the actuation of the operating element (20) is detected, wherein braking of the vehicle (1) preferably takes place even before the actuation has ended.

10. Method according to one of Claims 6 to 9,
**characterized in that**
an assistance system (10) according to one of Claims 1 to 5 is operated in order to perform the steps of the method.

## Revendications

1. Système d'assistance (10) pour un véhicule (1) destiné à mettre à disposition une fonction d'assistance d'arrêt d'urgence, possédant :
- un dispositif d'exécution (13), pour exécuter la fonction d'assistance d'arrêt d'urgence avec au moins un parmi plusieurs niveaux d'activation (100),
- un dispositif de détection (12) destiné à la détection automatique d'une inactivité du conducteur afin d'activer la fonction d'assistance d'arrêt d'urgence avec une première sélection de niveau (110) des niveaux d'activation (100),
- un dispositif de déclenchement (11) destiné à surveiller un élément de commande (20) d'un frein de stationnement électrique du véhicule (1) afin de, dans le cas d'un actionnement manuel de l'élément de commande (20), activer la fonction d'assistance d'arrêt d'urgence avec une deuxième sélection de niveau (120) des niveaux d'activation (100), laquelle est différente de la première sélection de niveau (110),
**caractérisé en ce que** l'activation dans le mode d'activation manuel n'a lieu que lorsqu'une pression sur l'élément de commande (20) est détectée, la pression étant exclusivement attribuée à l'activation de la fonction d'assistance d'arrêt d'urgence au niveau du véhicule (1).

2. Système d'assistance (10) selon la revendication 1,
**caractérisé en ce**
**qu'**un dispositif d'initiation de sortie (14) est présent, afin d'initier un message d'avertissement pour un occupant du véhicule (1) conformément à un premier niveau d'activation (101), le dispositif d'exécution (13) étant configuré pour exécuter le premier niveau d'activation (101) conformément à la première sélection de niveau (110) et ignorer le premier niveau d'activation (101) conformément à la deuxième sélection de niveau (120).

3. Système d'assistance (10) selon la revendication 1 ou 2,
**caractérisé en ce**
**qu'**un dispositif d'initiation de réveil (15) est présent, afin d'initier au moins une action de réveil, de préférence des pressions de freinage et/ou des pressions de ceinture de sécurité du véhicule (1) conformément à un deuxième niveau d'activation (102), le dispositif d'exécution (13) étant configuré pour exécuter le deuxième niveau d'activation (102) conformément à la première sélection de niveau (110) et conformément à la deuxième sélection de niveau (120).

4. Système d'assistance (10) selon l'une des revendications précédentes,
**caractérisé en ce**
**qu'**un dispositif d'initiation de fonction (16) est présent, afin d'initier des fonctions relatives à la sécurité du véhicule (1) parallèlement à un arrêt du véhicule (1) conformément à un troisième niveau d'activation (103), le dispositif d'exécution (13) étant configuré pour exécuter le troisième niveau d'activation (103) conformément à la première sélection de niveau (110) et conformément à la deuxième sélection de niveau (120).

5. Système d'assistance (10) selon l'une des revendications précédentes,
**caractérisé en ce**
**que** le dispositif de déclenchement (11) est réalisé pour fournir un anti-rebond dans le temps de l'élément de commande (20).

6. Procédé pour mettre à disposition une fonction d'assistance d'arrêt d'urgence sur un véhicule (1), les étapes suivantes étant exécutées :
- surveillance d'un conducteur (1) afin d'activer la fonction d'assistance d'arrêt d'urgence dans un mode d'activation automatique dans le cas de la détection d'une inactivité du conducteur,
- surveillance d'un élément de commande (20) d'un frein de stationnement électrique du véhicule (1) afin de, dans le cas d'une détection d'un actionnement manuel de l'élément de commande (20), activer la fonction d'assistance d'arrêt d'urgence dans un mode d'activation manuel,
- exécution de la fonction d'assistance d'arrêt d'urgence avec une sélection d'au moins un de plusieurs niveaux d'activation (100), la sélection s'effectuant en fonction du mode d'activation,
**caractérisé en ce que** l'activation dans le mode d'activation manuel n'a lieu que lorsqu'une pression sur l'élément de commande (20) est détectée, la pression étant exclusivement attribuée à l'activation de la fonction d'assistance d'arrêt d'urgence au niveau du véhicule (1).

7. Procédé selon la revendication 6,
**caractérisé en ce**
**qu'**une première sélection de niveau (110) comporte au moins un premier et un deuxième niveau d'activation (101, 102), lesquels sont exécutés l'un après l'autre lors du mode d'activation automatique, le premier de ces niveaux d'activation (100) étant ignoré lors du mode d'activation manuel.

8. Procédé selon la revendication 6 ou 7,
**caractérisé en ce**
**que** lors de l'activation dans le mode d'activation automatique, un avertissement pour le conducteur est tout d'abord initié conformément à un premier niveau d'activation (101), notamment pour inviter le conducteur à prendre en charge la commande du véhicule (1), et/ou des pressions de freinage et de ceinture de sécurité sont initiées, notamment afin de réveiller le conducteur et, après l'initiation, un deuxième niveau d'activation (102) n'est exécuté qu'après une durée prédéfinie de poursuite de l'inactivité du conducteur, le deuxième niveau d'activation (102) étant exécuté immédiatement lors de l'activation dans le mode d'activation manuel.

9. Procédé selon l'une des revendications 6 à 8,
**caractérisé en ce**
**que** l'activation dans le mode d'activation manuel n'a lieu que lorsqu'une traction de l'élément de commande (20) est détectée et/ou une fin de l'actionnement de l'élément de commande (20) est détectée, un freinage du véhicule (1) ayant lieu de préférence déjà avant la fin de l'actionnement.

10. Procédé selon l'une des revendications 6 à 8,
**caractérisé en ce**
**qu'**un système d'assistance (10) selon l'une des revendications 1 à 5 est utilisé pour exécuter les étapes du procédé.
